# FASCICULE DE BREVET EUROPEEN

(11) **EP 1 958 481 B1**
(45) Date de publication et mention de la délivrance du brevet: **19.06.2019**
(21) Numéro de dépôt: 06842062.9
(22) Date de dépôt: 29.11.2006
(51) Int. Cl.: H05B 3/74, C03C 17/00

(54) **PLAQUE VITROCÉRAMIQUE TRANSPARENTE OU TRANSLUCIDE ET SON PROCÉDÉ DE FABRICATION**
DURCHSICHTIGE ODER DURCHSCHEINENDE VITROKERAMISCHE SCHEIBE UND VERFAHREN ZU DEREN HERSTELLUNG
TRANSPARENT OR TRANSLUCENT GLASS CERAMIC PLATE AND A METHOD FOR THE PRODUCTION THEREOF

(30) Priorité: 05.12.2005 FR 0553709
(43) Date de publication de la demande: 20.08.2008
(73) Titulaire: Eurokera S.N.C., 02405 Château-Thierry Cedex (FR)
(72) Inventeur: VILATO, Pablo, 75014 Paris (FR); DEMOL, Franck, 02400 Chateau-thierry (FR)
(74) Mandataire: Saint-Gobain Recherche
(86) Numéro de dépôt international: PCT/FR2006/051251
(87) Numéro de publication internationale: WO 2007/066030

(56) Documents cités:
- WO-A-2005/092810
- FR-A- 2 838 429
- FR-A- 2 868 066
- US-A- 5 716 712

## Description

La présente invention concerne une plaque vitrocéramique transparente ou translucide (ces termes incluant les plaques dites semi-transparentes présentant par exemple une coloration dans la masse) destinée, notamment, à couvrir ou recevoir des éléments de chauffage, en particulier destinée à servir de plaque de cuisson, les éléments de chauffage associés à cette plaque étant par exemple des foyers de chauffage par induction, des foyers radiants, halogènes, etc.

Les ventes de plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit notamment présenter une transmission dans des longueurs d'onde du domaine du visible à la fois suffisamment basse pour masquer au moins une partie des éléments de chauffage sous-jacents au repos et suffisamment élevée pour que, dans un but de sécurité, l'utilisateur puisse détecter visuellement les éléments de chauffage en état de marche sans être ébloui, et les indicateurs de fonctionnement ou afficheurs donnant la puissance des foyers. Généralement, elle doit également présenter une transmission élevée dans les longueurs d'onde du domaine de l'infrarouge pour l'utilisation notamment avec des foyers radiants ou halogènes.

Les premières plaques mises au point ont ainsi été des plaques de couleur sombre. Plus récemment, d'autres plaques ont été mises au point d'aspect plus clair (en particulier blanches), et présentant par exemple un flou d'au moins 50% (comme décrit dans le brevet FR2766816), la prise en compte des critères précédemment cités (tels que la détection des éléments de chauffage en état de marche sans éblouissement ou vision peu esthétique desdits éléments) se faisant parfois au détriment d'autres aspects (tels que la vision nette d'afficheurs éventuels disposés sous la plaque).

Des plaques pourvues de revêtement(s) coloré(s) à base de résines réticulables ou de matériaux céramiques à base d'émail sont par ailleurs décrites respectivement dans les documents WO2005/092810 et US5716712.

La présente invention a cherché à mettre au point un nouveau type de plaque vitrocéramique permettant d'élargir la gamme de produits existants, en particulier une plaque vitrocéramique améliorée présentant, pour les usagers, une surface d'entretien plus facile, capable de présenter un bel aspect sans que n'apparaissent les traces de doigts peu esthétiques, et, pour les fabricants, une plus grande facilité de fabrication et de manipulation pour le transport et le montage des plaques dans les dispositifs de cuisson, sans que les modifications apportées n'aient d'effets néfastes sur les propriétés habituellement recherchées.

La nouvelle plaque selon l'invention est une plaque vitrocéramique, transparente ou translucide, destinée par exemple à couvrir ou recevoir au moins un élément de chauffage, en particulier destinée à servir de plaque de cuisson, ladite plaque présentant un revêtement comme défini en revendication 1, la majorité (au moins 90%), et de préférence l'ensemble, du revêtement se trouvant donc sur la face de la plaque destinée à être tournée vers le ou les éléments de chauffage en position d'utilisation (face généralement dite inférieure ou intérieure).

Par plaque vitrocéramique, on entend par la suite non seulement les plaques réalisées en vitrocéramique proprement dite, mais également les plaques en tout autre matériau analogue résistant à haute température et présentant un coefficient de dilatation nul ou quasi-nul ( par exemple inférieur à 20.10⁻⁷ K⁻¹). De préférence cependant, il s'agit d'une plaque en vitrocéramique proprement dite.

La fabrication des plaques se trouve simplifiée du fait que le dépôt de leur revêtement n'est effectué que sur une face - il sera aperçu au travers de la plaque à l'utilisation - d'où il résulte que ce dépôt et la manipulation ultérieure des plaques nécessitent moins de précautions que si les deux faces devaient comporter un revêtement. Par ailleurs un revêtement en surface supérieure complique l'entretien de cette surface, laquelle est soumise à une abrasion, à des salissures pouvant entraîner des tâches, et à une fragilisation.

Le revêtement selon l'invention est, de préférence, appliqué sur la totalité de la face précitée de la plaque.

Ledit revêtement comporte une zone ou un groupe de zones dit de fond, occupant la majorité de la surface du revêtement (généralement de 50 à 99%) et préférentiellement destiné à masquer l'essentiel de la structure chauffante que la plaque doit recouvrir, et une zone ou un groupe de zones dit de signalisation (représentant généralement de 1 à 50% de la surface du revêtement), permettant de mettre en évidence par rapport au fond, un décor et/ou une indication (marque, logo, symbole, etc.) et/ou l'emplacement d'éléments fonctionnels (tels que les éléments de chauffage, les organes de commande, les afficheurs, etc.) en permettant également de détecter si ces éléments sont en état de marche ou non, la ou les zones de fond et la ou les zones de signalisation se distinguant par leurs coloris ou leurs nuances de coloris et/ou leurs motifs, la séparation entre les différentes zones s'effectuant suivant des lignes franches ou suivant des régions à dégradés de couleurs ou de motifs.

Par la suite, on pourra entendre par zone (selon le nombre de zones de chaque catégorie présentes sur la plaque) aussi bien une seule zone bien délimitée (lorsque cette zone est unique dans sa catégorie) qu'un groupe ou ensemble de zones identiquement revêtues ou présentant le même effet (en relation avec le contraste recherché entre les zones ou groupes de zones) lorsqu'il y a plusieurs zones délimitées de même catégorie.

La base vitrocéramique ou substrat nu formant la plaque (avant l'ajout du revêtement) est préférentiellement transparente ou translucide comme indiqué précédemment, et présente généralement une transmission lumineuse T_{L} (dans le domaine des longueurs d'onde du visible - intégrée entre 0,38 µm et 0,78 µm - selon l'illuminant D₆₅) supérieure à 50%, en particulier comprise entre 50 et 90%. Le revêtement (et les couches le constituant comme explicité ultérieurement) est préférentiellement choisi de façon à ce que la plaque munie du revêtement selon l'invention présente à l'endroit de sa zone de fond une transmission lumineuse très faible (notamment inférieure à 5 ou 10%, voire quasi-nulle ou nulle), la zone dite de signalisation pouvant quant à elle présenter une transmission lumineuse inférieure par exemple à 20% (notamment comprise entre 0,2 et 20%) en particulier inférieure à 10% (notamment comprise entre 0,5 et 10%).

La ou les zones de fond et la ou les zones de signalisation peuvent notamment être formées chacune par au moins une couche de peinture, ou au moins une couche mince, ou une couche contenant des pigments à effet, ou une couche d'émail, etc., généralement et avantageusement opaque ou réfléchissante (et/ou éventuellement semi-transparente ou semi-réfléchissante) selon les zones. L'ensemble des différentes zones du revêtement est, de façon préférée, constitué par des couches de peinture et des couches minces, ou encore seulement par des couches de peinture. Les différentes zones de revêtement peuvent alors se distinguer par le fait que l'on a utilisé des peintures différentes et/ou des peintures de même base mais avec des pigments ou mélanges de pigments différents et/ou avec des concentrations de pigments différentes, et/ou encore des peintures appliquées avec des épaisseurs différentes et/ou appliquées avec un nombre différent de couches.

Le revêtement peut comporter des zones à motifs ou trame à maillage ou à piquetage ou à moucheture. On peut ainsi créer des effets esthétiques de répartition et de diffusion de la lumière lors de l'utilisation de la plaque.

La ou les couches de peinture pouvant être utilisées sont avantageusement choisies de façon à résister à de hautes températures et à présenter une stabilité, dans le temps au niveau de leur couleur et de leur cohésion avec la plaque, et de façon à ne pas affecter les propriétés mécaniques de la plaque.

La ou les peintures utilisées présentent avantageusement une température de dégradation supérieure à 350°C, en particulier comprise entre 350°C et 700°C. Elles sont généralement à base de résine(s), le cas échéant chargées (par exemple en pigment(s) ou colorant(s)), et sont éventuellement diluées pour ajuster leur viscosité en vue de leur application sur la vitrocéramique, le diluant ou le solvant (par exemple du white spirit, du toluène, des solvants de type hydrocarbures aromatiques, comme le solvant commercialisé sous la marque Solvesso 100® par la société Exxon, etc.) étant le cas échéant éliminé lors de la cuisson ultérieure de la ou des peintures.

Par exemple, la peinture peut être une peinture à base d'au moins une résine silicone, en particulier une résine silicone modifiée par l'incorporation d'au moins un radical tel qu'un radical alkyde ou phényle ou méthyle, etc. On peut également ajouter des pigments comme colorants, tels que des pigments pour émaux (choisis par exemple parmi les composants contenant des oxydes métalliques, tels que des oxydes de chrome, des oxydes de cuivre, des oxydes de fer, des oxydes de cobalt, des oxydes de nickel, ou parmi les chromates de cuivre, les chromates de cobalt, etc.), TiO₂, etc. On peut également utiliser comme pigments des particules d'un ou de métaux tels que l'aluminium, le cuivre, le fer, etc, ou des alliages à base d'au moins un de ces métaux.

De façon particulièrement préférée, la peinture utilisée comprend au moins (ou est à base de) un (co)polymère résistant à haute température (en particulier présentant une température de dégradation supérieure à 400°C), cette peinture pouvant ou non renfermer au moins une charge minérale pour assurer sa cohésion ou son renforcement mécanique et/ou sa coloration. Ce (co)polymère ou résine peut notamment être une ou plusieurs des résines suivantes : résine polyimide, polyamide, polyfluorée et/ou polysiloxane.

Les résines polysiloxanes sont particulièrement préférées : elles sont incolores, et donc susceptibles d'être colorées (par exemple avec des charges ou pigments leur conférant la couleur souhaitée) ; elles peuvent être utilisées en l'état réticulable (généralement de par la présence de groupements SiOH et/ou SiOMe dans leur formule, ces groupements intervenant le plus souvent jusqu'à 1 à 6% en masse de leur masse totale), ou transformées (réticulées ou pyrolysées). Elles présentent avantageusement dans leur formule, des motifs phényle, éthyle, propyle et/ou vinyle, très avantageusement des motifs phényle et/ou méthyle. Elles sont de préférence choisies parmi les polydiméthylsiloxanes, les polydiphénylsiloxanes, les polymères de phénylméthylsiloxane et les copolymères de diméthylsiloxane-diphénylsiloxane.

Les résines polysiloxanes réticulables utilisées préférentiellement présentent généralement une masse moléculaire moyenne en poids (Mw) comprise entre 2000 et 300 000 Daltons.

De façon non limitative on peut indiquer que des résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH, utilisées seules ou en mélange conviennent parfaitement.

Les résines ainsi choisies sont notamment aptes à résister au chauffage par induction et peuvent également convenir (en particulier les résines polysiloxanes ci-avant) pour d'autres types de chauffage (à brûleur à gaz, voire radiant ou halogène).

La peinture peut être exempte de charges minérales, notamment si son épaisseur reste faible. Toutefois, de telles charges minérales sont généralement utilisées, par exemple pour renforcer mécaniquement la couche de peinture déposée, contribuer à la cohésion de ladite couche, à son accrochage à la plaque, pour lutter contre l'apparition et la propagation de fissures en son sein, etc. A de telles fins, au moins une fraction desdites charges minérales présente préférentiellement une structure lamellaire. Les charges peuvent aussi intervenir pour la coloration. Le cas échéant, plusieurs types de charges complémentaires peuvent intervenir (par exemple des charges non colorées pour le renforcement mécanique et d'autres charges telles que des pigments pour la coloration). La quantité efficace de charges minérales correspond généralement à un taux volumique de 10 à 60%, plus particulièrement de 15 à 30% (taux volumiques basés sur le volume total des charges et de la peinture).

L'épaisseur de chaque couche de peinture déposée peut être comprise entre 1 et 100 microns, notamment entre 5 et 50 microns. L'application de la peinture ou résine peut s'effectuer par toute technique adaptée, telle que le dépôt à la brosse, à la raclette, par pulvérisation, dépôt électrostatique, trempage, dépôt au rideau, dépôt par sérigraphie, etc. et se fait de préférence par sérigraphie (ou éventuellement dépôt à la raclette).

Le dépôt peut être suivi par un traitement thermique destiné à assurer selon les cas le séchage, la réticulation, la pyrolyse, etc. de la ou des couches déposées.

De préférence, on choisit au moins une couche de peinture dans laquelle la résine a été, au moins en partie, réticulée et/ou pyrolysée, partiellement ou en totalité, et/ou n'a pas été traitée thermiquement (la résine peut éventuellement être destinée à être éliminée des endroits où elle n'a pas été traitée thermiquement), ladite couche de peinture consistant, en partie ou en totalité, en un mélange a) de charges minérales et b) d'au moins une résine polysiloxane réticulable (quasi) exempte de précurseur(s) de matériau(x) carboné(s) et/ou d'au moins une résine polysiloxane réticulée (quasi) exempte de matériau(x) carboné(s) et de précurseur(s) de matériau(x) carboné(s) et/ou d'une matrice minérale poreuse à base de silice (la résine ayant par exemple été pyrolysée et se trouvant donc minéralisée), (quasi) exempte de matériau(x) carboné(s), les charges minérales étant distribuées dans la résine ou la matrice.

En ce qui concerne la ou les couches minces pouvant être utilisées selon la présente invention, elles peuvent être sous forme de couches simples ou d'empilements de couches. Elles forment préférentiellement une ou des couches (semi)réfléchissantes, à effet miroir ou pailleté, des couches (semi)réfléchissantes pouvant également être obtenus par l'intermédiaire de couches comprenant des pigments à effet, comme explicité ultérieurement.

Selon un premier mode de réalisation particulièrement avantageux, on peut utiliser par exemple au moins une couche ((semi)réfléchissante) formée d'au moins une (sous) couche de type métallique et/ou d'au moins une (sous) couche à base de matériau diélectrique, cette couche présentant généralement et avantageusement un effet miroir.

Cette couche peut donc être par exemple au moins une couche simple métallique ou essentiellement métallique (par exemple une couche mince d'Ag, W, Ta, Mo, Ti, Al, Cr, Ni, Zn, Fe, ou d'un alliage à base de plusieurs de ces métaux, ou une couche mince à base d'aciers inoxydables, etc.), ou peut être un empilement de (sous) couches comprenant une ou plusieurs couches métalliques, par exemple une couche métallique (ou essentiellement métallique) avantageusement protégée (revêtue sur au moins une face et de préférence sur ses deux faces opposées) par au moins une couche à base de matériau diélectrique (par exemple au moins une couche en argent ou en aluminium revêtue d'au moins une couche de protection en Si₃N₄ - en particulier un empilement Si₃N₄/métal/Si₃N₄ - ou en SiO₂).

Il peut alternativement s'agir d'un revêtement monocouche à base de matériau diélectrique à fort indice de réfraction n, c'est-à-dire supérieur à 1.8, de préférence supérieur à 1.95, de façon particulièrement préférée supérieur à 2, par exemple une monocouche de TiO₂, ou de Si₃N₄, ou de SnO₂, etc.

Dans un autre mode de réalisation avantageux, la couche peut être formée d'un empilement de (sous) couches minces à base de matériau(x) diélectrique(s) alternativement à forts (de préférence supérieur à 1.8, voire 1.95, voire 2, comme explicité précédemment) et faibles (de préférence inférieur à 1.65) indices de réfraction, notamment de matériau(x) de type oxyde métallique (ou nitrure ou oxynitrure de métaux), tel que TiO₂, SiO₂ ou oxyde mixte (étain-zinc, zinc-titane, silicium-titane, etc.) ou alliage, etc., la (sous) couche déposée le cas échéant en premier et se trouvant donc contre la face intérieure de la plaque étant avantageusement une couche de fort indice de réfraction.

Comme matériau de (sous) couche à fort indice de réfraction, on peut citer par exemple TiO₂ ou éventuellement SnO₂, Si₃N₄, SnₓZn_{y}O_{z}, Ti_{z}nOₓ ou SiₓTi_{y}O_{z}, ZnO, ZrO₂, Nb₂O₅ etc. Comme matériau de (sous) couche à faible indice de réfraction, on peut citer par exemple SiO₂, ou éventuellement un oxynitrure et/ou un oxycarbure de silicium, ou un oxyde mixte de silicium et d'aluminium, ou un composé fluoré par exemple de type MgF₂ ou AlF₃, etc.

L'empilement peut comprendre par exemple au moins trois (sous) couches, la couche la plus proche du substrat étant une couche de fort indice de réfraction, la couche intermédiaire étant une couche à faible indice de réfraction, et la couche extérieure étant une couche à fort indice de réfraction (par exemple un empilement comprenant l'alternance de couches d'oxydes suivante : (substrat)-TiO₂/SiO₂/TiO₂).

L'épaisseur (géométrique) de chaque couche à base de couche(s) mince(s) déposée est généralement comprise entre 15 et 1000 nm, en particulier 20 et 1000 nm (l'épaisseur du substrat étant généralement de quelques millimètres, le plus souvent autour de 4 mm), l'épaisseur de chacune des (sous) couches (dans le cas d'un empilement) pouvant varier entre 5 et 160 nm, généralement entre 20 et 150 nm (par exemple dans le cas de l'empilement TiO₂/SiO₂/TiO₂, elle peut être de l'ordre de quelques dizaines de nanomètres, par exemple de l'ordre de 60-80 nm, pour les couches de TiO₂ et de l'ordre de 60 -80 ou 130-150 nm pour la couche de SiO₂ selon l'aspect, par exemple plutôt argenté ou plutôt doré, que l'on souhaite obtenir).

La couche à base de couche (s) mince (s) peut être appliquée sur la plaque, généralement après céramisation, en ligne ou en reprise (par exemple après découpe et/ou façonnage de ladite plaque). Elle peut être appliquée notamment par pyrolyse (poudre, liquide, gazeuse), par évaporation, ou par pulvérisation). De préférence, elle est déposée par pulvérisation et/ou par une méthode de dépôt sous vide et/ou assistée par plasma ; on utilise en particulier le mode de dépôt de couche(s) par pulvérisation cathodique (par exemple par pulvérisation cathodique magnétron), notamment assistée par champ magnétique (et en courant continu ou alternatif), les oxydes ou nitrures étant déposés à partir de cible(s) de métal ou d'alliage ou de silicium ou céramique(s), etc. appropriées, si nécessaire dans des conditions oxydantes ou nitrurantes (mélanges le cas échéant d'argon/oxygène ou d'argon/azote). On peut déposer par exemple les couches d'oxyde par pulvérisation réactive du métal en question en présence d'oxygène et les couches de nitrures en présence d'azote. Pour faire du SiO₂ ou du Si₃N₄ on peut partir d'une cible en silicium que l'on dope légèrement avec un métal comme l'aluminium pour la rendre suffisamment conductrice. La ou les (sous) couches choisies selon l'invention se condensent sur le substrat de façon particulièrement homogène, sans qu'il ne se produise de séparation ou délaminage.

Dans un autre mode de réalisation de l'invention, on peut utiliser comme couche (notamment (semi)réfléchissante) une couche comprenant des pigments à effet (pigments à effet métallique, pigments interférentiels, pigments nacrés, etc.), le cas échéant dissous dans un médium approprié, cette couche présentant généralement un effet pailleté. Cette couche est préférentiellement à base de silicate fondu, fritte ou fondant de verre (mélange vitrifiable comprenant généralement des oxydes choisis notamment parmi ceux employés dans les frittes pour émail, par exemple parmi les oxydes de silicium, de zinc, de sodium, de bore, de lithium, de potassium, de calcium, d'aluminium, de magnésium, de baryum, de strontium, d'antimoine, de titane, de zirconium, etc), et les pigments à effet utilisés sont avantageusement sous forme de paillettes d'oxyde d'aluminium (Al₂O₃) revêtues par des oxydes métalliques ; on peut citer par exemple les pigments commercialisés par la Société MERCK sous la marque « Xirallic® », tels que des pigments ou pigments interférentiels TiO₂/Al₂O₃ (Xirallic® T-50-10SW Crystal Silver ou Xirallic® T-60-23SW Galaxy Blue ou Xirallic® T-60-24SW Stellar Green), ou des pigments Fe₂O₃/Al₂O₃ (Xirallic® T-60-50SW Fireside Copper ou (Xirallic® F-60-51 Radiant Red).

D'autres pigments à effet pouvant être utilisés sont par exemple les pigments nacrés à base de particules de mica revêtues par des oxydes ou combinaison d'oxydes (choisis par exemple parmi TiO₂, Fe₂O₃, Cr₂O₃, etc), tels que ceux commercialisés sous la marque IRIODIN® par la Société Merck, ou à base de plaquettes de silice revêtues par des oxydes ou combinaison d'oxydes (comme ceux ci-dessus), tels que ceux commercialisés sous la marque Colorstream® par la Société Merck. Des charges ou autres pigments de coloration classiques peuvent également être incorporés aux pigments à effet précités. Le taux de pigments à effet peut être par exemple de l'ordre de 1 à 30% en poids par rapport à la base (silicate fondu, fritte ou fondant de verre) dans laquelle ils sont incorporés. La couche peut être notamment déposée par sérigraphie (la base et les pigments étant le cas échéant mis en suspension dans un médium approprié généralement destiné à se consumer dans une étape de cuisson ultérieure, ce médium pouvant notamment comporter des solvants, des diluants, des huiles, des résines, etc), l'épaisseur de la couche étant par exemple de l'ordre de 1 à 6 µm.

D'autres pigments (non nécessairement à effet) peuvent plus généralement être utilisés dans le cas d'une couche d'émail, l'émail étant formé à partir d'une poudre comprenant une fritte de verre et des pigments (ces pigments pouvant également faire partie de la fritte), et d'un médium pour l'application sur le substrat (les exemples d'oxydes formant les frittes pour émail et de médiums étant déjà donnés dans les deux paragraphes précédents). Les pigments peuvent être choisis parmi les composés contenant des oxydes métalliques tels que des oxydes de chrome, de cuivre, de fer, de cobalt, de nickel, etc, ou peuvent être choisis parmi les chromates de cuivre ou de cobalt, etc, le taux de pigment (s) dans l'ensemble fritte(s)/pigment(s) étant par exemple compris entre 10 et 50 % en poids. La ou chaque couche d'émail utilisée pour former le revêtement est de préférence une couche simple, isolée d'autre (s) couche (s) d'émail éventuelle (s), et d'épaisseur n'excédant généralement pas 6 pm, de préférence n'excédant 3 pm. La couche d'émail est en général déposée par sérigraphie.

Les plaques selon l'invention sont pratiques d'utilisation et faciles à nettoyer. Le positionnement de l'ensemble du revêtement en face inférieure permet d'éviter le cas échéant des effets optiques inesthétiques tels qu'un dédoublement d'image, en même temps qu'il permet d'éviter des problèmes d'abrasion dudit revêtement lors du nettoyage de la face exposée (surface extérieure ou supérieure tournée vers l'utilisateur) de la plaque en position d'utilisation.

Les plaques selon l'invention sont généralement des plaques à deux faces lisses, sans picots en face inférieure.

Le revêtement est généralement continu dans chacune des zones que l'on peut discerner sur la plaque mais il n'est cependant pas exclu d'avoir des dépôts moins couvrants en certains endroits (de type par exemple partie mouchetée ou maillage ou piquetage, etc.), le taux de couverture dans ces endroits restant cependant préférentiellement important (proche de 100%).

La plaque selon l'invention peut le cas échéant être munie de (ou associée avec des) élément(s) fonctionnel(s) ou de décor supplémentaire(s) (cadre, connecteurs(s), câble(s), élément(s) de commande, afficheur(s), par exemple à diodes électroluminescentes dits « à 7 segments », bandeau de commande électronique à touches sensitives et affichage digital, etc.).

De préférence, la plaque selon l'invention est destinée à être associée à des éléments sous-jacents de chauffage par induction. Les foyers de cuisson à chauffage par induction sont connus et se composent généralement d'un convertisseur (ou générateur) relié à une self (ou inducteur) constituée par un bobinage de fils conducteurs. Le champ électromagnétique créé par le passage d'un courant haute fréquence produit par le convertisseur génère des courants de Foucault dans le fond métallique des ustensiles disposés sur la plaque, permettant la chauffe rapide de ces ustensiles. Les variations et maxima de températures subis par la plaque sont moins importants que ceux que l'on observe avec d'autres éléments de chauffage, par exemple halogène ou radiant, de ce fait la plaque selon l'invention est particulièrement bien adaptée à ce mode de chauffage, les chocs thermiques subis par le revêtement étant moins importants et moins susceptibles de l'endommager à long terme.

La plaque selon l'invention peut avantageusement être montée sur le support isolant, à l'intérieur duquel sont disposés le ou les éléments de chauffage, sans complexe intermédiaire visant à masquer l'intérieur de l'appareil à la vue de l'utilisateur.

L'invention concerne aussi les appareils (ou dispositifs) de cuisson et/ou de maintien à haute température comportant au moins une plaque selon l'invention (par exemple cuisinières, et plaques de cuisson encastrables). L'invention englobe aussi bien des appareils de cuisson comportant une seule plaque que des appareils comportant plusieurs plaques, chacune de ces plaques étant à feu unique ou à feux multiples. Par le terme « feu », on entend un emplacement de cuisson. L'invention concerne également des appareils de cuisson mixtes dont la ou les plaques de cuisson comportent plusieurs types de feux.

En outre, l'invention n'est pas limitée à la fabrication de plaques de cuisson pour cuisinières ou tables de cuisson, les plaques fabriquées conformément à l'invention pouvant également être d'autres plaques devant présenter une grande insensibilité aux variations de température.

L'invention a également pour objet un procédé de fabrication d'une plaque selon l'invention.

La fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 550°C et de préférence jusqu'à 700°C. La céramisation comprend en général une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Le procédé comprend généralement une opération de découpe, par exemple par traçage mécanique avec une molette, jet d'eau ou laser, suivie généralement par une opération de façonnage (meulage, éventuellement biseautage...) .

Le procédé de fabrication de la plaque selon l'invention se caractérise par le fait que l'on applique la majorité et de préférence l'ensemble du revêtement sur la face de la plaque vitrocéramique nue destinée à être tournée vers le ou les éléments de chauffage en position d'utilisation. De préférence, on applique au moins une première couche (ou ensemble de (sous) couches) destinée à former au moins une première zone, et dans laquelle sont prévues ou pratiquées une ou des épargnes (ou réserves), et on vient recouvrir lesdites épargnes par au moins une seconde couche (ou ensemble de (sous) couches) destinée à former au moins une seconde zone contrastée par rapport à la ou aux premières zones(en répétant l'opération si une ou d'autres zones sont prévues).

Les couches sont appliquées par tous moyens connus de l'homme du métier en fonction notamment de la composition des couches à former. Des exemples des différentes méthodes d'application possibles ont été donnés précédemment. Selon le type de couche, le dépôt peut se faire avant (cas par exemple d'une couche d'émail pouvant être cuite pendant la céramisation) ou après céramisation (cas préféré de la peinture et des couches de type métallique ou à base de matériau diélectrique décrites précédemment, cas également possible pour les émaux, etc), en ligne ou en reprise (par exemple après découpe et/ou façonnage de ladite plaque).

Pour la formation des épargnes, on peut utiliser différents moyens (selon le type de couche déposée et la précision des moyens de dépôt). Les réserves peuvent être laissées par la technique de dépôt (sérigraphie), ou en prévoyant des masques adéquats, par exemple en tôle, etc. On peut également envisager le dépôt d'une couche pouvant être éliminée, au niveau des épargnes, par lavage, ablation, polissage, etc., par exemple un dépôt de peinture que l'on ne durcit ou réticule que dans les parties voulues, le reste étant éliminé par lavage, ou bien un dépôt de couche(s) de type métallique ou à base de matériau diélectrique dans lequel on enlève des épargnes par des moyens tels que l'ablation laser ou le polissage.

Concernant le dépôt de la seconde couche (ou d'autres couches éventuelles), il peut être effectué dans les réserves ou épargnes seulement (avec des moyens de dépôt ou masques appropriés par exemple), ou sur une plus grande partie de la plaque, en particulier sur toute la plaque.

Par exemple, on applique par sérigraphie (en une, voire plusieurs passes ou sous couches, et en prévoyant des épargnes), une première couche de peinture, par exemple mate, puis, après traitement thermique ou cuisson de la peinture et lavage éventuel de la plaque, on applique la seconde couche (ou ensemble de (sous) couches) en recouvrant l'ensemble des zones déjà couvertes et des épargnes par au moins une couche (semi)réfléchissante à effet miroir, par pulvérisation cathodique (dans le cas d'une pulvérisation cathodique magnétron, il est en effet plus aisé de procéder au dépôt sur toute la plaque).

Dans un autre mode de réalisation, l'ordre de dépôt peut être inversé, par exemple en déposant au moins une couche (semi)réfléchissante continue sur la face inférieure de la plaque pourvue de masques aux endroits des épargnes choisies, en enlevant les masques et recouvrant si nécessaire les parties déjà couvertes d'autres masques, puis en appliquant la peinture, la peinture ne recouvrant avantageusement sur la plaque finale obtenue que les zones non couvertes par la couche réfléchissante.

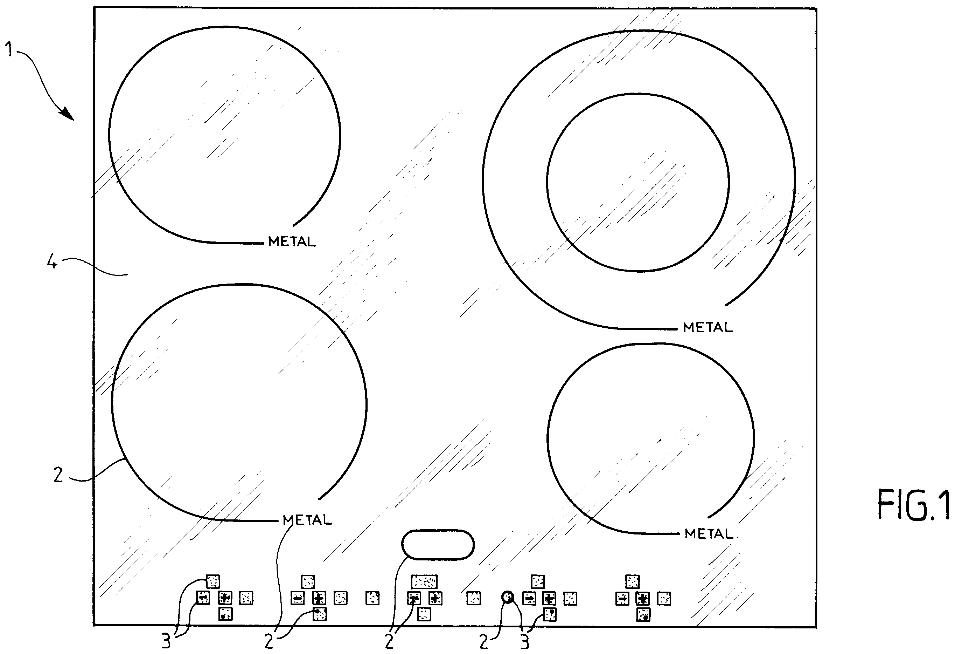

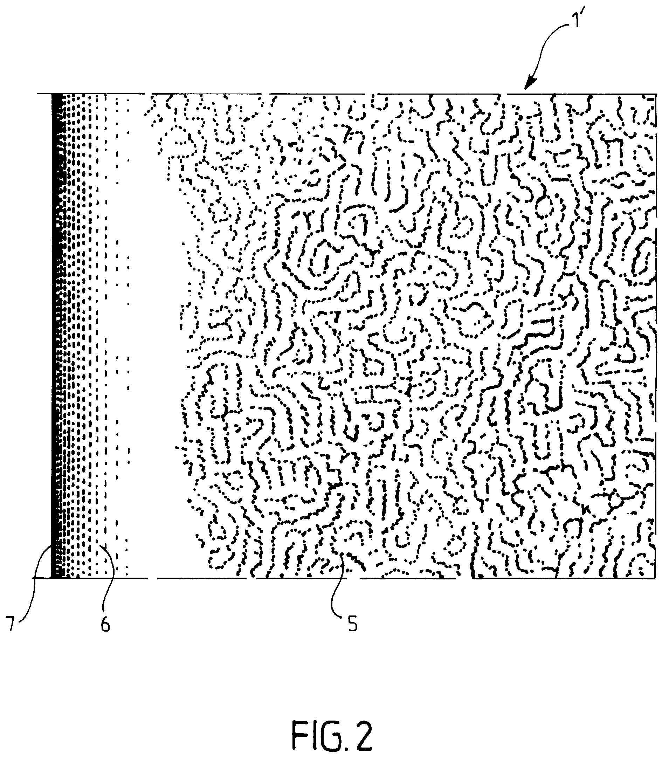

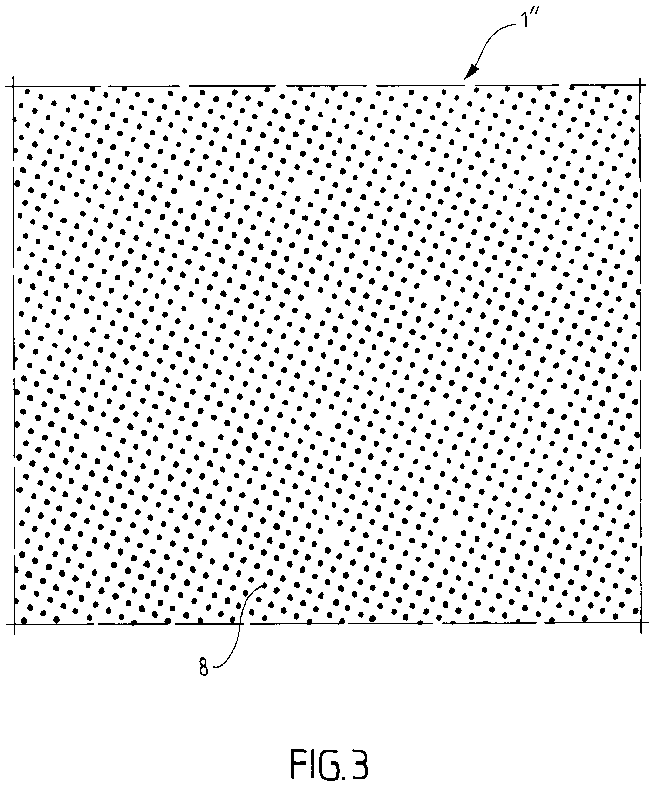

Les exemples suivants illustrent la présente invention sans toutefois en limiter la portée conjointement avec les figures 1 à 3 annexées (issues de photographies) qui représentent :
- pour la figure 1, une vue de dessus d'une plaque selon l'invention ; et
- pour les figures 2 et 3, des vues fragmentaires de dessus de deux plaques selon l'invention montrant leurs zones de fond dont le décor est à maillage ou à piquetage.

Dans les exemples, on fabrique une plaque vitrocéramique transparente dont les deux faces sont lisses à partir d'un verre ayant par exemple la composition décrite dans la demande EP0437228.

Ce verre est fondu aux alentours de 1600°C, en une quantité telle qu'un ruban de verre puisse être laminé, ruban dans lequel des plaques de verre de dimensions finales 56,5 cm x 56,5 cm x 0,4 cm sont découpées.

Ces plaques de verre sont céramisées sur des grilles céramiques selon un cycle de céramisation comprenant les étapes suivantes :
a) élévation de la température à 30-80 degrés/minute jusqu'au domaine de nucléation, généralement situé au voisinage du domaine de transformation du verre ;
b) traversée de l'intervalle de nucléation (670-800°C) en une vingtaine de minutes avec maintien en température de quelques minutes ;
c) élévation de la température en 15 à 30 minutes jusqu'à la température T du palier de céramisation de l'ordre de 930°C ;
d) maintien de la température T du palier de céramisation pendant un temps de t de l'ordre de 20 minutes ;
e) refroidissement rapide jusqu'à la température ambiante.

Dans l'exemple 1 (figure 1), La plaque 1 est dotée sur sa face inférieure, par exemple en trois passes de sérigraphie successives, d'un revêtement qui, vu de dessus (par transparence de la vitrocéramique portant le revêtement) comporte des zones destinées à la signalisation ou à la vision d'éléments en marche (représentées ici par des parties noires 2 ou gris foncé 3), et une zone de fond (représentée ici par la partie plus claire 4, également dans les tons gris le cas échéant).

Le revêtement est obtenu à partir d'une même peinture de base dont les pigments sont à chaque passe modifiés pour obtenir le ton ou l'effet désiré (tel que le masquage des éléments de chauffage au repos et la vision d'indicateurs en état de marche). La peinture peut être appliquée après avoir été diluée dans un médium approprié et peut être une peinture à base d'au moins une résine polysiloxane (obtenue par exemple en mélangeant un polymère silicone et une solution silicone) et de charges (telles que le pigment ou le mélange de pigments pour donner le ton désiré).

Après chaque application de peinture (par exemple en une ou plusieurs couches à chaque passe), on procède à une cuisson ou à une polymérisation dans un four ou tunnel. L'épaisseur d'une couche de peinture obtenue est par exemple comprise entre 15 et 100 microns.

Entre chaque passe, le masque de sérigraphie est changé en fonction des parties de revêtement à former.

Les parties (noires) 2 sont ici constituées par : des lignes courbes délimitant les emplacements qui se situeront au-dessus de quatre foyers de chauffage, et par un cercle se situant dans l'espace interne à la ligne courbe délimitant le plus grand foyer de chauffage ; des régions formant les symboles +, - (indicateurs) et un petit cercle formant le symbole de marche ainsi que quatre petits carrés de façon à symboliser l'emplacement du foyer concerné sur la plaque ; et des indications essentiellement décoratives telles qu'une marque ou une dénomination ou un logo (symbolisés par le cartouche central situé juste au dessus des indicateurs précités) et les lettres du mot METAL-associé à chaque ligne courbe délimitant un foyer.

Les parties (gris foncé) 3 sont constituées par : des carrés ou rectangles délimitant des zones qui se situeront au-dessus d'afficheurs ou indicateurs (de durée, puissance, etc.) incluant des rectangles faisant ressortir les signes +, - et des carrés incluant les petits carrés précités rappelant la position des foyers ainsi que l'intérieur du cercle noir formant le symbole de marche.

On obtient donc une plaque vitrocéramique à l'aspect esthétique plaisant et original, cette plaque présentant une zone de fond mate opaque cachant les éléments de structure sous-jacents du dispositif de cuisson, et comportant une zone (gris foncé) 3 cachant également les éléments sous-jacents au repos tout en permettant de voir quand ils sont en état de marche. Outre la variation liée notamment au choix ou à la concentration de pigments plus ou moins opacifiants, les épaisseurs des zones varient (par exemple sont selon les zones de 10, 15 ou 30 microns).

Le revêtement étant totalement en face inférieure, il n'y a pas de problèmes de dédoublement de l'image ni de problèmes d'abrasion (par exemple par frottements de casseroles) du décor ni de fragilisation de celui-ci. Les traces possibles laissées par les doigts sont invisibles ou peu visibles. La plaque peut être montée dans un cadre, encastrée dans un dispositif de cuisson, etc.

Sur la Figure 2, on a représenté une partie d'une autre plaque vitrocéramique 1' selon l'invention, montrant un fond à décor de type maillage ou piquetage 5 et sa région de raccordement 6, par dégradés croisés de points, avec une zone de couleur plus foncée 7 destinée à faire partie d'une zone de signalisation.

Le revêtement de la Figure 2 est obtenu par exemple en deux passes, à savoir une première passe de sérigraphie pour former les zones de couleur foncée par une peinture par exemple du type de celle utilisée à l'Exemple 1 dans une épaisseur de 15 à 100 microns, puis une seconde passe de pulvérisation cathodique magnétron, sur toute la surface de la face inférieure de la plaque déjà revêtue de la peinture, d'une couche mince semi-réfléchissante dans des épaisseurs de l'ordre d'une vingtaine de nanomètres. Un exemple de la couche mince semi-réfléchissante est une couche à base de Ni-Cr-Fe.

Entre les deux passes, la peinture est cuite ou polymérisée dans un four ou tunnel comme indiqué à l'Exemple 1 et, le cas échéant, lavée avant la pulvérisation cathodique.

Sur la Figure 3, on a représenté une partie du fond du revêtement d'une autre plaque vitrocéramique 1'' réalisé selon une variante de l'Exemple 2 en changeant le cadre de sérigraphie, ce fond étant de type maillé ou moucheté 8.

On voit donc que l'on peut obtenir des plaques avec des décors de trame très variés, notamment à effet diffusant la lumière : maillé, moucheté, piqueté, etc. La répartition et la diffusion de la lumière, créées par le dessous de la plaque, seront du plus bel effet (puits de lumière) et pourront être choisis par les décorateurs et designers pour s'adapter au mieux à tous les types d'éléments de chauffage et d'éclairage sous-jacents.

Les plaques selon l'invention peuvent notamment être utilisées avec avantage pour réaliser une nouvelle gamme de plaques de cuisson pour cuisinières ou tables de cuisson.

## Revendications

1. Plaque vitrocéramique (1,1',1''), transparente ou translucide, destinée par exemple à couvrir ou recevoir au moins un élément de chauffage, en particulier destinée à servir de plaque de cuisson, ladite plaque présentant un revêtement destiné à masquer, au moins en partie, les éléments sous-jacents au repos, tout en permettant la détection des éléments de chauffage et afficheurs éventuels lorsqu'ils sont en service, ledit revêtement comportant une zone ou un groupe de zones dit de fond (4,5,8), occupant la majorité de la surface du revêtement et préférentiellement destiné à masquer l'essentiel de la structure chauffante que la plaque doit recouvrir, et une zone ou un groupe de zones dit de signalisation (2,3,7), la ou les zones de fond et la ou les zones de signalisation se distinguant par leurs coloris ou leurs nuances de coloris et/ou leurs motifs, la séparation entre les différentes zones s'effectuant suivant des lignes franches ou suivant des régions à dégradés de couleurs ou de motifs (6), la ou les zones de fond et la ou les zones de signalisation étant formées chacune par au moins une couche de peinture ou au moins une couche mince ou une couche avec des pigments à effet ou une couche d'émail, **caractérisée par le fait que** ladite ou lesdites zones de signalisation permettent de mettre en évidence par rapport au fond, un décor et/ou une indication et/ou l'emplacement d'éléments fonctionnels en permettant également de détecter si ces éléments sont en état de marche ou non, et **par le fait qu'**au moins 90% du revêtement se trouve sur la face de la plaque destinée à être tournée vers le ou les éléments de chauffage et afficheurs éventuels en position d'utilisation.

2. Plaque vitrocéramique selon la revendication 1, **caractérisée par le fait que** ledit revêtement est appliqué sur la totalité de ladite face de la plaque.

3. Plaque vitrocéramique selon l'une des revendications 1 ou 2, **caractérisée par le fait que** l'ensemble des différentes zones du revêtement est constitué par des couches de peinture et des couches minces, avantageusement par des couches de peinture.

4. Plaque vitrocéramique selon l'une des revendications 1 à 3, **caractérisée par le fait que** les différentes zones de revêtement se distinguent **par le fait que** l'on a utilisé des peintures différentes et/ou des peintures de même base mais avec des pigments ou mélanges de pigments différents et/ou avec des concentrations de pigments différentes, et/ou encore des peintures appliquées avec des épaisseurs différentes et/ou appliquées avec un nombre différent de couches.

5. Plaque vitrocéramique selon l'une des revendications 1 à 4, **caractérisée par le fait que** le revêtement comporte des zones à motifs ou trame à mailles ou à piquetage ou à moucheture (5,8).

6. Procédé de fabrication d'une plaque selon l'une des revendications 1 à 5 dans lequel on applique le revêtement sur la face de la plaque vitrocéramique nue destinée à être tournée vers le ou les éléments de chauffage en position d'utilisation.

7. Procédé selon la revendication 6 **caractérisé en ce que** l'on applique au moins une première couche destinée à former au moins une première zone, et dans laquelle sont prévues ou pratiquées une ou des épargnes, et on vient recouvrir lesdites épargnes par au moins une seconde couche destinée à former au moins une seconde zone contrastée par rapport à la ou aux premières zones.

8. Dispositif de cuisson et/ou de maintien à haute température comportant une plaque vitrocéramique selon l'une des revendications 1 à 5 et un ou plusieurs éléments de chauffage, en particulier de chauffage par induction.

## Patentansprüche

1. Durchsichtige oder durchscheinende Glaskeramikplatte (1, 1', 1"), die zum Beispiel dazu bestimmt ist, mindestens ein Heizelement abzudecken oder aufzunehmen, die insbesondere dazu bestimmt ist, als Kochfeld zu dienen, wobei die Platte eine Beschichtung aufweist, die dazu bestimmt ist, die darunterliegenden Elemente im Ruhezustand zumindest teilweise abzudecken, und gleichzeitig das Erkennen der Heizelemente und gegebenenfalls der Anzeigen ermöglicht, wenn sie in Betrieb sind, wobei die Beschichtung eine Zone oder eine Gruppe von Zonen, Bodenzonen (4, 5, 8) genannt, die den Großteil der Oberfläche der Beschichtung einnimmt und bevorzugt dazu bestimmt ist, das Wesentliche der Heizstruktur, die die Scheibe bedecken soll, zu maskieren, und eine Zone oder Gruppe von Zonen, Signalisierungszonen (2, 3, 7) genannt, umfasst, wobei sich die Bodenzone(n) und die Signalisierungszone(n) durch ihre Farbgebung oder ihre Farbgebungsnuancen und/oder ihre Muster unterscheiden, wobei die Trennung zwischen den unterschiedlichen Zonen entlang von scharf abgegrenzten Linien oder entlang von Bereichen mit Farbabstufungen oder Mustern (6) erfolgt, wobei die Bodenzone(n) und die Signalisierungszone(n) jeweils aus mindestens einer Lackschicht oder mindestens einer dünnen Schicht oder einer Schicht mit Pigmenten mit Effekt oder einer Emailschicht gebildet sind, **dadurch gekennzeichnet, dass** die Signalisierungszone(n) es ermöglichen, im Vergleich zu dem Boden ein Dekor und/oder eine Angabe und/oder die Position von Funktionselementen hervorzuheben, wobei es auch ermöglicht wird zu erkennen, ob diese Elemente in Betrieb sind oder nicht, und dadurch, dass mindestens 90% der Beschichtung auf der Seite der Platte liegen, die dazu bestimmt ist, in der Verwendungsposition dem oder den Heizelementen zugewandt zu sein.

2. Glaskeramikplatte nach Anspruch 1, **dadurch gekennzeichnet, dass** die Beschichtung auf die gesamte Seite der Platte aufgebracht ist.

3. Glaskeramikplatte nach einem der Ansprüche 1 oder 2, **dadurch gekennzeichnet, dass** alle unterschiedlichen Zonen der Beschichtung aus Lackschichten und dünnen Schichten, vorteilhafterweise aus Lackschichten, gebildet sind.

4. Glaskeramikplatte nach einem der Ansprüche 1 bis 3, **dadurch gekennzeichnet, dass** sich die unterschiedlichen Beschichtungszonen dadurch unterscheiden, dass unterschiedliche Lacke und/oder Lacke mit derselben Basis, aber unterschiedlichen Pigmenten oder Pigmentgemischen und/oder mit unterschiedlichen Pigmentkonzentrationen verwendet wurden und/oder auch Lacke, die in unterschiedlichen Stärken aufgebracht wurden und/oder in einer unterschiedlichen Anzahl von Schichten aufgebracht wurden.

5. Glaskeramikplatte nach einem der Ansprüche 1 bis 4, **dadurch gekennzeichnet, dass** die Beschichtung Zonen mit Mustern oder Raster mit Maschen oder mit Markierungen oder mit Tupfen (5, 8) umfasst.

6. Verfahren zur Herstellung einer Platte nach einem der Ansprüche 1 bis 5, wobei die Beschichtung auf die Seite der bloßen Glaskeramikplatte aufgebracht wird, die in der Verwendungsposition dazu bestimmt ist, dem oder den Heizelementen zugewandt zu sein.

7. Verfahren nach Anspruch 6, **dadurch gekennzeichnet, dass** mindestens eine erste Schicht aufgebracht wird, die dazu bestimmt ist, mindestens eine erste Zone zu bilden und in der eine oder mehrere Aussparungen vorgesehen oder ausgebildet sind, und die Aussparungen durch mindestens eine zweite Schicht abgedeckt werden, die dazu bestimmt ist, mindestens eine zweite Zone zu bilden, die zu der oder den ersten Zonen kontrastiert.

8. Koch- und/oder Warmhaltevorrichtung, die eine Glaskeramikplatte nach einem der Ansprüche 1 bis 5 sowie ein oder mehrere Heizelemente, insbesondere Induktionsheizelemente, umfasst.

## Claims

1. A transparent or translucent glass-ceramic plate (1, 1', 1''), intended for example to cover or receive at least one heating element, in particular intended to serve as a hob or cook-top, said plate having a coating intended to at least partly mask the underlying elements when not in use, while still allowing the heating elements and optional displays to be detected when they are in use, said coating having a region or a group of regions known as the background (4,5,8), occupying most of the surface of the coating and preferentially intended to mask the main part of the heating structure that the plate must cover, and a region or a group of regions called indicating regions (2,3,7), the background region(s) and the indicating region(s) being distinguished by their colors or their shades of color and/or their patterns, the separation between the various zones being carried out along clear lines or along areas having color or pattern graduation(s) (6), the background region(s) and the indicating region(s) being each formed by at least one layer of paint or at least one thin layer or a layer with effect pigments or an enamel layer, **characterized in that** the indicating region(s) make(s) it possible to display, relative to the background, a pattern and/or a sign and/or the location of functional elements while also making it possible to detect if these elements are in operation or not, and **in that** at least 90% of the coating is on the face of the plate intended to be turned toward the heating element(s) and optional displays in the use position.

2. The glass-ceramic plate as claimed in claim 1, **characterized in that** said coating is applied over the entirety of said face of the plate.

3. The glass-ceramic plate as claimed in either of claims 1 and 2, **characterized in that** all of the various regions of the coating are formed from layers of paint or thin layers, advantageously from layers of paint.

4. The glass-ceramic plate as claimed in one of claims 1 to 3, **characterized in that** the various coating regions are distinguished by the fact that different paints and/or paints having the same base but with different pigments or mixtures of pigments and/or with different pigment concentrations, and/or else paint applied with different thicknesses and/or applied with a different number of layers, have been used.

5. The glass-ceramic plate as claimed in one of claims 1 to 4, **characterized in that** the coating comprises regions having a mesh or speckled or spotted screen or patterns.

6. A process for manufacturing a plate as claimed in one of claims 1 to 5, in which the coating is applied onto the face of the bare glass-ceramic plate intended to be turned toward the heating element (s) in the use position.

7. The process as claimed in claim 6, **characterized in that** at least a first layer intended to form at least a first region is applied, and in which one or more resists are provided or made, and said resists are covered by at least a second layer intended to form at least a second region contrasting relative to the first region(s) .

8. A high-temperature-maintaining and/or cooking device comprising a glass-ceramic plate as claimed in one of claims 1 to 5, and one or more heating elements, in particular induction heating elements.
